Europäisches Patentamt

(19) European Patent Office

Office européen des brevets

(11) Publication number : **0 210 212**
**B1**

(12)

# EUROPEAN PATENT SPECIFICATION

(45) Date of publication of patent specification :
02.11.89

(51) Int. Cl.⁴ : **A 01 C   7/10, F 16 H  29/02**

(21) Application number : **86900798.9**

(22) Date of filing : **16.01.86**

(86) International application number :
**PCT/GB 86/00027**

(87) International publication number :
**WO/8604209 (31.07.86 Gazette 86/17)**

(54) DRIVE TRANSMISSION FOR DISTRIBUTING MACHINES.

(30) Priority : **18.01.85 GB 8501333**

(43) Date of publication of application :
**04.02.87 Bulletin 87/06**

(45) Publication of the grant of the patent :
**02.11.89 Bulletin 89/44**

(84) Designated contracting states :
**AT BE CH DE FR GB IT LI LU NL SE**

(56) References cited :
**BE–A–   570 707
DE–A– 1 557 975
DE–B– 1 082 132
DE–C–   829 672**

(73) Proprietor : **P.J. PARMITER & SONS LIMITED
Station Works
Tisbury Wiltshire SP3 7QZ (GB)**

(72) Inventor : **WILLIS, Robert, Anthony
28 St. Peter's Road Oundle
Peterborough Cambridgeshire (GB)**

(74) Representative : **King, James Bertram
KINGS PATENT AGENCY LIMITED 73 Farringdon
Road
London EC1M 3JB (GB)**

## Description

This invention relates to drive transmissions and in particular, to drive transmissions for use in transmitting drive to the dispensing mechanism of a machine for distributing particulate material such as an agricultural or horticultural seed and/or fertiliser drill, whether of the cereal drill kind or of the precision kind having individual row units.

In the case of cereal seed drills which have a dispensing mechanism which is itself adjustable to vary the rate of dispensing, a constant ratio drive can be provided for the dispensing mechanism and adjustments in output rate are achieved by use of the output adjustment·mechanism. An example of such is the fluted roll dispensing system in which axial adjustment of the fluted rolls varies the output rate.

In the case of more precise dispensing mechanisms, such as those employing resilient full width seed dispensing rollers, it has been·the practice in the past to provide a variable ratio drive to the dispensing rollers so as to vary the rate of output according to drilling conditions and other requirements.

Various mechanisms have been proposed for such variable ratio drives. These have been mainly conventional spur gear drives which are by no means inexpensive as regards initial manufacturing cost and also require significant maintenance and are not always as robust as could be wished. They do not, however, provide a continuous drive to the output shaft.

Drive mechanisms of a kind not necessarily requiring the provision of spur gears are disclosed in patent documents BE-A-570707 and DE-C-829672. These, however, do not provide a continuous rotation of the output shaft.

There is thus a need for an improved drive transmission suitable for use in relation to agricultural and horticultural seed and/or fertiliser drills, and/or other distributing machines and implements and/or other agricultural and horticultural implements driven by land wheels, or other mechanisms or machines, and providing at least some of the following functions and advantages, namely a variable ratio drive, a modest initial manufacturing cost, a - robust structure, a low maintenance requirement and a continuous drive output. It is an aim of the present invention to provide a drive transmission, and a machine incorporating same) offering improvements in relation to some at least of these requirements, or generally.

According to the invention there is provided a drive transmission and a distributing machine incorporating same as defined in the accompanying claims.

Embodiments of the invention will now be described by way of example with reference to the accompanying drawings, in which :

Fig. 1 shows a side elevation view of a drive transmission ;

Fig. 2 shows an end view of the drive transmission of Fig. 1, the direction of viewing being indicated by arrow II in Fig. 1 ; and

Fig. 3 shows a side elevation view of an agricultural cereal drill incorporating a second embodiment of the drive transmission.

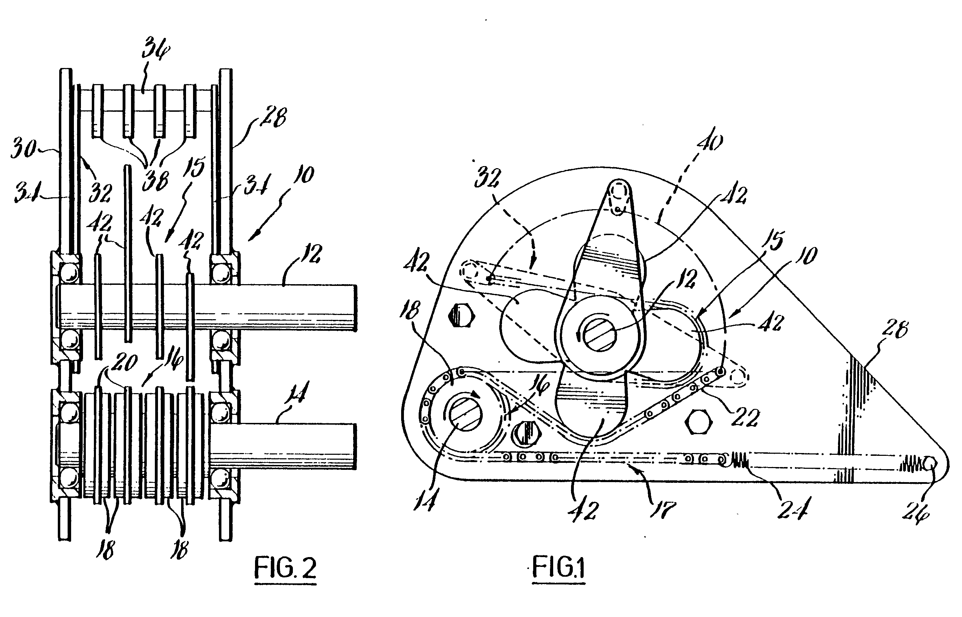

As shown in Fig. 2 of the drawings a drive transmission 10 transmits drive from the ground wheels of a seed drill to the seed dispensing rollers of the drill. Drive from the ground wheels is transmitted upwards from the wheel axles through a conventional chain and sprocket drive to an input shaft 12 of transmission 10. The transmission is located in a housing (not shown) which can be oil-filled or may have other provision for lubrication. An output shaft 14 projects through the housing and transmits drive to a roller shaft (not shown) on which a series of seed and/or fertiliser dispensing rollers are mounted to dispense seed downwards from the hopper of the seed drill to the coulters thereof.

Drive transmission 10 is mounted at a suitable accessible location on the frame of the drill for access and maintenance purposes and also for ratio adjustment purposes likewise.

As shown in the drawings, drive transmission 10 comprises, in addition to input shaft 12 and output shaft 14, a one way output means 16 connected to output shaft 14, an input drive means 15 connected to input shaft 12 and tension means 17 interconnecting the input and output drive means whereby tension applied to the tension means causes drive to be transmitted to the output shaft.

In this embodiment, the one way output drive means comprises four freewheel devices 18, each having an associated sprocket 20 to co-operate with four chains 22 constituting the tension means 17.

Each chain 22 extends from a spring 24 anchored at 26 to the side mounting plates 28, 30 through a pin extending therebetween, round its respective sprocket 20 and is position-adjustably located by being connected to a yoke assembly 32.

Yoke assembly 32 comprises a pair of yoke arms 34 mounted for pivotal angular movement about the axis of input shaft 12 and provided with a connecting pin 36 carrying four ears 38 suitably apertured for connection to the chains 22. Means (not shown) is provided for anchoring the yoke assembly and the attached chain ends at any selected point on the arc 40 shown in Fig. 1 and representing the locus of movement of the yoke assembly, for a purpose to be described.

The input drive means 15 mounted on input shaft 12 comprises an assembly of four cams 42 arranged at 90° intervals about the shaft and positioned at axially spaced locations on the input shaft for co-operation, one with each of the chains 22. The cams are generally pear shaped and, as shown in Fig. 1 cause the chains 22 to be deflected downwards as seen in that figure for drive transmission purposes.

In use, the drive transmission operates as follows.

In the position of yoke assembly 32 shown in Fig. 1, the chains 22 are in the condition for minimum displacement by the cams 42, and this corresponds to the setting of the drive transmission for minimum output shaft speed, for a given input shaft speed.

As each cam 42 rotates (in the anti-clockwise direction as seen in Fig. 1) it deflects the upper run of its chain 22 downwards as seen in Fig. 1. The end of the chain secured to yoke assembly 32 is fixed. So too is the end 26 of its spring 24. Thus, the cam throw causes the spring 24 to be extended, thus putting the chain under tension and, effectively, causing bodily movement of the lower portion of the chain (as seen in Fig. 1) such as to impart a degree of angular movement to output shaft 14 through its sprocket 20 and associated freewheel device 18. Thus, the direction of rotation of the output shaft is clockwise as seen in Fig. 1. It would also be clockwise in the case of reverse rotation (clockwise rotation) of the input shaft.

As shown in Fig. 1, the four cams 42 are equally out of phase with each other and each one acts on its respective chain 22 in turn to transmit its drive component to the output shaft 14 in turn. In this way the output shaft receives four equal drive transmission components from each of the cams and thus is effectively continuously driven.

To adjust the transmission ratio, it is merely necessary to adjust the position of yoke assembly 32 about the axis of input shaft 12 along arc 40. This adjusts the transmission ratio by causing the throw of each cam to be more effective in relation to its chain whereby the displacement of the chain, and hence the angular rotation of the output shaft, is increased. Obviously, such adjustment is « infinite » in the sense of being stepless within the range of adjustment provided.

This latter feature of the drive transmission is a considerable advantage for seed and fertilizer drills since drilling conditions require considerable variation in seed rate and with conventional spur gear transmissions only a very limited number of ratios is available and it is usually not possible to make minor adjustments in seed rate.

It will be appreciated that the mechanism described above is simple and robust and very well adapted to agricultural requirements both in regard to basic structure and also by virtue of its ease of maintenance. Initial manufacturing cost is relatively low and thus the transmission enables the cost for the entire assembly of seed dispensing rollers and their drive to be competitive with that of the alternative type of mechanism where seed rate adjustment is achieved by axial position adjustment of the dispensing shaft.

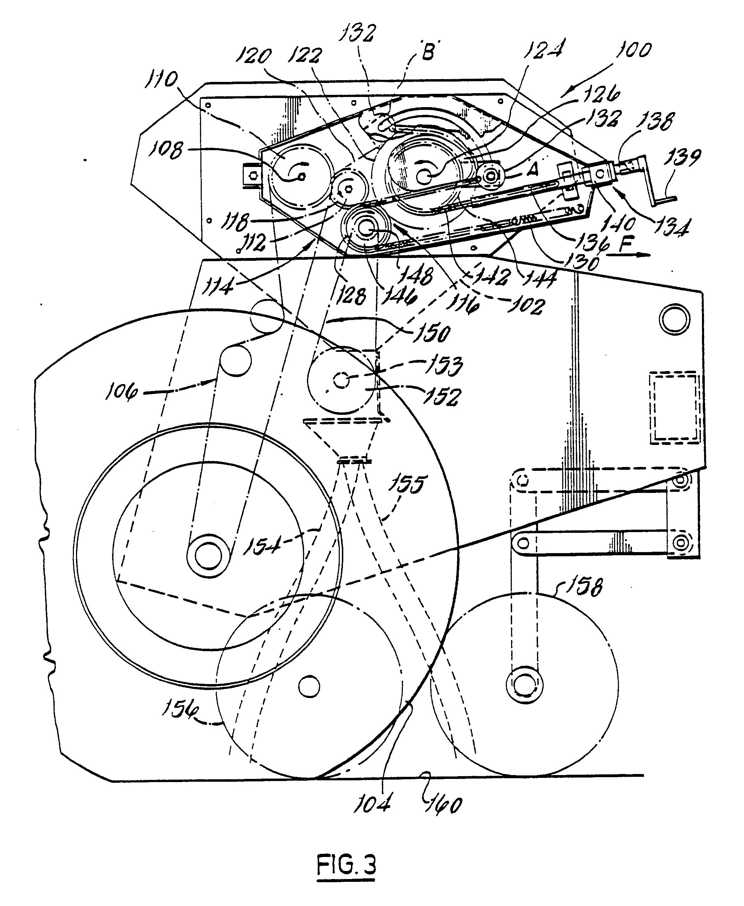

In the embodiment of Fig. 3, the drive is incorporated into a distributing machine in the form of an agricultural or horticultural seed and/or fertiliser drill. The drive incorporates modifications with regard to cam profile, method of adjustment of drive transmission ratio, and otherwise with respect to the embodiment of Figs. 1 and 2. However, except where stated, this embodiment is constructed and operates as described above.

As shown in Fig. 3, a seed drill 100 having a forward travel direction F comprises a seed/fertiliser hopper 102 mounted on ground wheels 104 from which a drive 106 is taken to a primary shaft 108. A pair of interchangeable spur gears 110, 112 are in constant mesh to provide a step-up or step-down primary stage to the variable ratio drive 114. A reduction drive 116 is provided by a sprocket 118 coaxial with spur gear 112 and transmitting drive via a chain 120 to a sprocket 122 mounted on an input cam shaft 124 constituting the input shaft of the variable ratio drive itself. Input shaft 124 carries four cams 126 disposed at ninety degree intervals around the shaft and co-operating with respective chains 128 in the same manner as the cams in the preceding embodiment. The shape of each cam 126 is generally that of a D with appropriate rounding of the corners of the profile. Chains 128 are tensioned by respective springs 130, as in the preceding embodiment.

Adjustment of the drive ratio is effected by angular adjustment of a mounting 132, to which the chain ends are secured, about the axis of input cam shaft 124, between the end positions A and B in Fig. 3. Adjustment of the mounting member 132 in this arc is effected by an adjustment mechanism 134 comprising a screw threaded adjuster shaft 136 actuable by means of a head 138 and a removable adjustment handle 139, in co-operation with a trunnioned body member 140 so as to position-adjust shaft 136 lengthwise along its axis. An adjuster chain 142 is secured to shaft 136 and connected to a sprocket 144 mounted coaxially on input cam shaft 124 through bearings (not shown) whereby the sprocket can be position-adjusted and actuated independently of the cam shaft. A swinging arm (not shown) is welded to sprocket 144 and connects it to mounting member 132, whereby angular adjustment of the sprocket 144 by means of chain 142 and adjustment mechanism 134 causes swinging movement of the mounting member 132 between its end positions A and B, to vary the drive ratio.

In this embodiment it will be noted that the profiles of cams 126 are such as to remove the backlash from the one-way free wheel sprockets 146 connected to output shaft 148, before taking up the drive. The drive input to cam shaft 124 brings the output speed range of the drive to the output shaft 148 to a level compatible with the drill requirements. Spur gears 110, 112 can be interchanged to reduce the drive input speed.

It will be noted that the springs 130 acting on the chains 128 ensure that tension is always maintained in the adjuster chain 142.

In operation, this embodiment functions in a manner analogous to that the preceding embodiment. Drive is transmitted from ground wheels 104 through drive 106 to primary shaft 108 and hence via input gears 110, 112 and chain 120 to input cam shaft 124. The drive then passes through the tensioned chains 128 and free wheel sprockets 146 to output shaft 148. Connected to shaft 148 by a chain and sprocket drive 150 are seed/fertiliser metering rollers indicated at 152 and mounted on a common shaft 153 whereby seed and/or fertiliser from hopper 102 is metered and delivered through down tubes 154, 155 to coulters 156, 158 engaging the soil 160.

With respect to detailed disclosure of the structure of the seed drill and fertiliser dispensing mechanisms which may be driven in the manner disclosed above, reference is directed to our prior British patent specifications as listed below, the disclosures of which are hereby incorporated herein by reference :

GB 2024784 B
GB 2026447 B
GB 2028777 B
GB 2064491 B

Among the advantages of the latter embodiment described above is that arising from the mode of interaction of the cams and the chains. This, as compared with prior proposals for cam and lever drives, is less susceptible to limitations imposing a need for at least a certain minimum drive input speed to the input cam shaft, having regard to the desirability for a reasonably constant angular velocity of the output shaft. Cams acting on roller chains between the chain ends produce a drive of greater robustness, and enables the drive ratio to be conveniently changed by moving the chains with respect to the cam means.

Many modifications could be made in the above embodiment while remaining within the scope of the invention. Such modifications include the following :

1. The use of alternative kinds of free wheel device or one way clutch to transmit drive to the output shaft.

2. Use of alternative tension members in place of the roller chains described above, with necessary corresponding changes to the sprockets 20 and the cam means.

3. The use of cams of different profiles and different throw, and the use of more than four cams and associated components for applying tension to or deflecting the chains, with variation of the drive ratio by varying the throw of the cams.

4. The drive transmission may be applied to other machines for distributing particulate material including not only those of precision drills, but also other agricultural/horticultural machines such as spinner broadcasters and indeed non-agricultural/horticultural distributing machines and other machines.

5. For certain applications, alternatives to roller chains can be contemplated.

## Claims

1. A device (114) for transmitting angular movement to an output shaft (148) to be turned, the device comprising :

an input shaft (124) ;

input drive means connected to the input shaft ;

the output shaft (148) ;

one-way output drive means (146) connected to the output shaft ;

two or more tension members (128) connecting the input and output drive means ;

the input drive means comprising two or more mutually angularly displaced cam members (126) arranged to actuate their respective tension members (128) to impart increments of angular movement to the output shaft (148) via the one-way output drive means (146) ; and

means (134) for varying the magnitude of said increments ;

characterised in that

said device (114) forms part of a machine for distributing particulate material, such as an agricultural seed drill (known in itself), the machine comprising a dispensing mechanism (152, 153, 154) for the particulate material drivably coupled to said output shaft (148) ; and

further characterised in that said input drive means comprises four or more cam members (126) disposed at equal angular intervals around the input shaft (124), the cam members each having a varying radius of curvature whereby the device provides a drive transmission capable of continuously rotating said output shaft (148) at a reasonably constant angular velocity for a given input shaft speed and thereby dispensing said particulate material continuously at a predetermined rate.

2. The device of claim 1, characterised by said cam members (126) each having a generally D-shaped profile, corners at the ends of the linear portion of the D being rounded.

3. The device of claim 1, characterised in that said cam members (126) directly engage the rollers of respective roller chains (128) forming said tension members.

4. The device of claim 1, characterised in that said means (134) for varying the magnitude of said increments comprises a manually actuable screw mechanism arranged so that manual rotation of a screw member (136) it self causes adjustment of the ends of the tension members by application of a thrust thereto.

5. The device of claim 1, characterised in that said machine (100) for distributing particulate material is in the form of an agricultural seed and/or fertiliser drill comprising a hopper (102) having multiple outlets (154, 155) and a dispensing mechanism (152) for each outlet, a common shaft assembly (153) being provided to drive each dispensing mechanism and drive for the shaft being provided from a ground-engageable wheel (104) through said device (114).

6. The machine of claim 5, characterised in that said device (114) is mounted at one end of said hopper (102) with a handle (139) to vary the drive transmission ratio, the handle projecting from a housing of the device (114) for convenient manual actuation.

## Patentansprüche

1. Eine Vorrichtung (114) zum Übertragen einer Winkelbewegung an eine zu drehende Abtriebswelle (148), wobei die Vorrichtung die folgenden Teile umfaßt :

eine Antriebswelle (124) ;

ein an die Antriebswelle angeschlossenes Antriebsmittel ;

die Abtriebswelle (148) ;

ein an die Abtriebswelle angeschlossenes Einweg-Abtriebsmittel (146) ;

zwei oder mehr Spannteile (128), die die Antriebs- und Abtriebsmittel verbinden ;

wobei das Antriebsmittel zwei oder mehr im Verhältnis zueinander winkelig angeordnete Nockenelemente (126) umfaßt, die so angeordnet sind, daß sie ihre entsprechenden Spannteile (128) so betätigen, daß über das Einweg-Abtriebsmittel (146) Stufen winkeliger Bewegung an die Abtriebswelle (148) übertragen werden ; und

ein Mittel (134) zum Regeln der Größe besagter Stufen ;

dadurch gekennzeichnet, daß

die besagte Vorrichtung (114) einen Teil einer Maschine zum Streuen von körnigem Material bildet, zum Beispiel einer landwirtschaftlichen Drillmaschine für Saatgut (an sich bekannt), wobei die Maschine einen Streumechanismus (152, 153, 154) für das körnige Material umfaßt, der antreibbar mit der besagten Abtriebswelle (148) gekoppelt ist ; und

des weiteren dadurch gekennzeichnet, daß das besagte Antriebsmittel vier oder mehr Nockenelemente (126) umfaßt, die in gleichen Winkelabständen rings um die Antriebswelle (124) angeordnet sind, wobei jedes Nockenelement einen variierenden Krümmungsradius aufweist, so daß die Vorrichtung eine Antriebsübertragung bildet, die in der Lage ist, die besagte Abtriebswelle (148) mit angemessen konstanter Winkelgeschwindigkeit bei einer vorgegebenen Antriebswellendrehzahl kontinuierlich zu drehen und dadurch das besagte körnige Material laufend mit voreingestellter Geschwindigkeit zu streuen.

2. Die Vorrichtung nach Anspruch 1, dadurch gekennzeichnet, daß jedes der besagten Nockenelemente (126) ein im allgemeinen D-förmiges Profil aufweist, wobei die Ecken an den Enden des linearen Teiles des D gerundet sind.

3. Die Vorrichtung nach Anspruch 1, dadurch gekennzeichnet, daß die besagten Nockenelemente (126) unmittelbar in die Rollen der entsprechenden besagten Spannteile bildenden Rollenketten (128) eingreifen.

4. Die Vorrichtung nach Anspruch 1, dadurch gekennzeichnet, daß das besagte Mittel (134) zum Regeln der Größe der besagten Stufen einen von Hand betätigbaren Schraubenmechanismus umfaßt, der so beschaffen ist, daß manuelles Drehen eines Schraubenteils (136) selbst Einstellung der Enden des Spannteils durch Ausübung eines darauf einwirkenden Druckes verursacht.

5. Die Vorrichtung nach Anspruch 1, dadurch gekennzeichnet, daß die besagte Maschine (100) zum Streuen von körnigem Material in der Form einer landwirtschaftlichen Drillmaschine für Saatgut und/oder Düngemittel ist und einen Füllrumpf (102) mit mehreren Auslässen (154, 155) besitzt, sowie einen Ausgabemechanismus (152) für jeden Auslaß, wobei für den Antrieb jedes Streumechanismus eine gemeinsame Wellengruppe (153) vorgesehen ist und ein für Bodenangriff geeignetes Rad (104) über die besagte Vorrichtung (114) den Antrieb für die Welle bewirkt.

6. Die Maschine nach Anspruch 5, dadurch gekennzeichnet, daß die besagte Vorrichtung (114) an einem Ende des besagten Füllrumpfes (102) angeordnet ist und einen Griff (139) zum Regeln des Antriebsübertragungsverhältnisses besitzt, wobei der Griff zwecks praktischer manueller Betätigung aus einem Gehäuse der Vorrichtung (114) vorsteht.

## Revendications

1. Un dispositif (114) de transmission du mouvement angulaire à un arbre de sortie (148) devant être entraîné en rotation, le dispositif comprenant :

un arbre de sortie (124) ;

un moyen d'entraînement d'entrée relié à l'arbre d'entrée ;

l'arbre de sortie (148) ;

un moyen d'entraînement de sortie en sens unique (146) relié à l'arbre de sortie ;

deux éléments de tension (128) ou davantage reliant les moyens d'entraînement d'entrée et de sortie ;

le moyen d'entraînement d'entrée comprenant deux éléments excentriques (126) ou davantage déplacés angulairement entre eux, disposés de manière à actionner leurs éléments de tension respectifs (128) pour conférer des incréments de mouvement angulaire à l'arbre de sortie (148) par l'intermédiaire du moyen d'entraînement de sortie à sens unique (146) ; et

un moyen (134) permettant de faire varier l'amplitude desdits incréments ;

caractérisé en ce que

ledit dispositif (114) fait partie d'une machine de distribution de matériau particulaire, comme un semoir agricole (déjà connu), la machine comprenant un mécanisme distributeur (152, 153, 154) pour le matériau particulaire, solidaire dudit arbre de sortie (148) ; et

caractérisé en outre en ce que ledit moyen d'entraînement d'entrée comprend quatre éléments excentriques (126) ou davantage disposés à intervalles angulaires égaux autour de l'arbre d'entrée (124), les éléments excentriques ayant chacun un rayon de courbure variable grâce auquel le dispositif assure une transmission du mouvement capable de faire tourner continuellement ledit arbre de sortie (148) à une vitesse angulaire raisonnablement constante pour une vitesse donnée de l'arbre d'entrée et distribuant ainsi continuellement ledit matériau particulaire à un débit prédéterminé.

2. Le dispositif de la revendication 1, caractérisé par le fait que lesdits éléments excentriques (126) ont chacun un profil en forme générale de D, les angles situés aux extrémités de la partie linéaire du D étant arrondis.

3. Le dispositif de la revendication 1, caractérisé en ce que lesdits éléments excentriques (126) engagent directement les rouleaux de chaînes à rouleaux respectifs (128) formant lesdits éléments de tension.

4. Le dispositif de la revendication 1, caractérisé en ce que ledit moyen (134) de variation de l'amplitude desdits incréments comprend un mécanisme à vis actionnable manuellement disposé de telle sorte que la rotation manuelle d'un élément à vis (136) cause elle-même le réglage des extrémités des éléments de tension en leur appliquant une poussée.

5. Le dispositif de la revendication 1, caractérisé en ce que ladite machine (100) de distribution du matériau particulaire est sous la forme d'un semoir agricole et/ou distributeur d'engrais comprenant une trémie (102) comportant des sorties multiples (154, 155) et un mécanisme de distribution (152) pour chaque sortie, un ensemble arbre commun (153) étant prévu pour entraîner chaque mécanisme de distribution et l'entraînement de l'arbre étant assuré par une roue (104) engageant le sol par l'intermédiaire dudit dispositif (114).

6. La machine de la revendication 5, caractérisée en ce que ledit dispositif (114) est monté à une extrémité de ladite trémie (102) avec une manivelle (139) permettant de faire varier le rapport de transmission de l'entraînement, la manivelle dépassant d'un carter du dispositif (114) pour la commodité de son actionnement manuel.

FIG.2

FIG.1

EP 0 210 212 B1

FIG. 3